(19)

**Europäisches Patentamt**

**European Patent Office**

**Office européen des brevets**

(11)  **EP 4 405 940 B1**

(12)  # EUROPEAN PATENT SPECIFICATION

(45) Date of publication and mention
of the grant of the patent:
**25.03.2026  Bulletin 2026/13**

(21) Application number: **22786256.2**

(22) Date of filing: **16.09.2022**

(51) International Patent Classification (IPC):
**G10L 15/16** *(2006.01)*

(52) Cooperative Patent Classification (CPC):
**G10L 15/16**

(86) International application number:
**PCT/US2022/076584**

(87) International publication number:
**WO 2023/059978 (13.04.2023 Gazette 2023/15)**

(54) **DELIBERATION OF STREAMING RNN-TRANSDUCER BY NON-AUTOREGRESSIVE DECODING**

DELIBATION EINES RNN-STREAMING-WANDLERS DURCH NICHT AUTOREGRESSIVE
DECODIERUNG

DÉLIBÉRATION DE TRANSDUCTEUR À RÉSEAU DE NEURONES RÉCURRENTS EN DIFFUSION
CONTINUE PAR DÉCODAGE NON AUTO-RÉGRESSIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.10.2021  US 202163262180 P**

(43) Date of publication of application:
**31.07.2024  Bulletin 2024/31**

(73) Proprietor: **Google LLC
Mountain View, CA 94043 (US)**

(72) Inventors:
• **WANG, Weiran
Mountain View, California 94043 (US)**
• **HU, Ke
Mountain View, California 94043 (US)**
• **SAINATH, Tara N
Mountain View, California 94043 (US)**

(74) Representative: **Shipp, Nicholas
Kilburn & Strode LLP
Lacon London
84 Theobalds Road
London WC1X 8NL (GB)**

(56) References cited:
• **RUCHAO FAN ET AL: "CASS-NAT: CTC
Alignment-based Single Step Non-
autoregressive Transformer for Speech
Recognition", ARXIV.ORG, CORNELL
UNIVERSITY LIBRARY, 201 OLIN LIBRARY
CORNELL UNIVERSITY ITHACA, NY 14853, 28
October 2020 (2020-10-28), XP081802689**
• **CHING-FENG YEH ET AL: "Transformer-
Transducer: End-to-End Speech Recognition
with Self-Attention", ARXIV.ORG, CORNELL
UNIVERSITY LIBRARY, 201 OLIN LIBRARY
CORNELL UNIVERSITY ITHACA, NY 14853, 28
October 2019 (2019-10-28), XP081522240**
• **MIAO HAORAN ET AL: "Online Hybrid CTC/
Attention End-to-End Automatic Speech
Recognition Architecture", IEEE/ACM
TRANSACTIONS ON AUDIO, SPEECH, AND
LANGUAGE PROCESSING, IEEE, USA, vol. 28,
20 April 2020 (2020-04-20), pages 1452 - 1465,
XP011790590, ISSN: 2329-9290, [retrieved on
20200527], DOI: 10.1109/TASLP.2020.2987752**

**Description**

TECHNICAL FIELD

This disclosure relates to deliberation of streaming RNN-Transducer by Non-Autoregressive Decoding.

BACKGROUND

Automated speech recognition (ASR) systems have evolved from multiple models where each model had a dedicated purpose to integrated models where a single neural network is used to directly map an audio waveform (i.e., input sequence) to an output sentence (i.e., output sequence). This integration has resulted in a sequence-to-sequence approach, which generates a sequence of words (or graphemes) when given a sequence of audio features. With an integrated structure, all components of a model may be trained jointly as a single end-to-end (E2E) neural network. Here, an E2E model refers to a model whose architecture is constructed entirely of a neural network. That is, a fully neural network function without external and/or manually designed components (e.g., finite state transducers, a lexicon, or text normalization modules). Additionally, when training E2E models, these models generally do not require bootstrapping from decision trees or time alignments from a separate system. These E2E ASR systems have made tremendous progress, surpassing conventional ASR systems in several common benchmarks including word error rates (WER). For instance, a number of applications that involve user interaction, such as voice-search or on-device dictation, require the model to perform recognition in a streaming fashion. Other applications, like offline video capturing, do not require the model to be streaming and can make use of future context to improve performance. Oftentimes, it would be beneficial for a model to perform recognition in a streaming fashion while also having improved performance similar to non-streaming models that make use of the future context.

Prior-art document RUCHAO FAN ET AL: "CASS-NAT: CTC Alignment-based Single Step Non-autoregressive Transformer for Speech Recognition" discloses a method for CTC alignment for a CTC-based speech decoding output using an acoustic span inside a non-autoregressive transformer.

SUMMARY

One aspect of the disclosure provides a computer-implemented method that when executed on data processing hardware causes the data processing hardware to perform operations for performing deliberation of streaming RNN-T by non-autoregressive decoding. The operations include receiving an initial alignment for a candidate hypothesis generated by a transducer decoder model during a first pass. The candidate hypothesis corresponds to a candidate transcription for an utterance and the initial alignment for the candidate hypothesis includes a sequence of output labels each corresponding to a blank symbol or a hypothesized sub-word unit. The operations also include receiving a subsequent sequence of audio encodings characterizing the utterance. During an initial refinement step, the operations include generating a new alignment for a rescored sequence of output labels using a non-autoregressive decoder configured to receive the initial alignment for the candidate hypothesis generated by the transducer model during the first pass and the subsequent sequence of audio encodings.

Implementations of the disclosure may include one or more of the following optional features. In some implementations, the non-autoregressive decoder includes a plurality of transformer layers each configured to perform self-attention on text features associated with the initial alignment and use the self-attention performed on the text features as a query to perform cross-attention on the subsequent sequence of audio encodings representing both a key and value to provide a transformer layer output. In these implementations, each respective transformer layer subsequent to an initial transformer layer in the plurality of transformer layers receives the transformer layer output from a corresponding previous transformer layer as the text features. A final transformer layer in the plurality of transformer layers provides the transformer layer output to a final softmax layer configured to predict the new alignment for the rescored sequence of output labels.

In some examples, during each of one or more additional refinement steps subsequent to the initial refinement step, the operations further include generating a new alignment for a rescored sequence of output labels using the non-autoregressive decoder configured to receive the new alignment for the rescored sequence of output labels generated during a previous refinement step. Generating the new alignment for the rescored sequence of output labels may include inserting, deleting, or substituting one or more output labels of the initial alignment for the candidate hypothesis.

In some implementations, the operations further include generating, by a causal encoder during the first pass, an initial sequence of audio encoding based on a sequence of acoustic frames corresponding to an utterance. In these implementations, the subsequent sequence of audio encodings are encoded by a non-causal encoder based on the initial sequence of audio encodings. The transducer decoder may generate the candidate hypothesis using the initial sequence of audio encodings. In some examples, the candidate transcription of the candidate hypothesis includes a sequence of output labels each corresponding to a hypothesized sub-word unit.

Another aspect of the disclosure provides a system that includes data processing hardware and memory hardware storing instructions that when executed on the data processing hardware causes the data processing hardware to perform operations. The operations include receiving an initial alignment for a candidate hypothesis generated by a transducer decoder model during a first pass. The candidate hypothesis corresponds to a candidate transcription for an utterance and the initial alignment for the candidate hypothesis includes a sequence of output labels each corresponding to a blank symbol or a hypothesized sub-word unit. The operations also include receiving a subsequent sequence of audio encodings characterizing the utterance. During an initial refinement step, the operations include generating a new alignment for a rescored sequence of output labels using a non-autoregressive decoder configured to receive the initial alignment for the candidate hypothesis generated by the transducer model during the first pass and the subsequent sequence of audio encodings.

Implementations of the disclosure may include one or more of the following optional features. In some implementations, the non-autoregressive decoder includes a plurality of transformer layers each configured to perform self-attention on text features associated with the initial alignment and use the self-attention performed on the text features as a query to perform cross-attention on the subsequent sequence of audio encodings representing both a key and value to provide a transformer layer output. In these implementations, each respective transformer layer subsequent to an initial transformer layer in the plurality of transformer layers receives the transformer layer output from a corresponding previous transformer layer as the text features. A final transformer layer in the plurality of transformer layers provides the transformer layer output to a final softmax layer configured to predict the new alignment for the rescored sequence of output labels.

In some examples, during each of one or more additional refinement steps subsequent to the initial refinement step, the operations further include generating a new alignment for a rescored sequence of output labels using the non-autoregressive decoder configured to receive the new alignment for the rescored sequence of output labels generated during a previous refinement step. Generating the new alignment for the rescored sequence of output labels may include inserting, deleting, or substituting one or more output labels of the initial alignment for the candidate hypothesis.

In some implementations, the operations further include generating, by a causal encoder during the first pass, an initial sequence of audio encoding based on a sequence of acoustic frames corresponding to an utterance. In these implementations, the subsequent sequence of audio encodings are encoded by a non-causal encoder based on the initial sequence of audio encodings. The transducer decoder may generate the candidate hypothesis using the initial sequence of audio encodings. In some examples, the candidate transcription of the candidate hypothesis includes a sequence of output labels each corresponding to a hypothesized sub-word unit.

The details of one or more implementations of the disclosure are set forth in the accompanying drawings and the description below. Other aspects, features, and advantages will be apparent from the description and drawings, and from the claims.

DESCRIPTION OF DRAWINGS

FIG. 1 is a schematic view of an example speech recognition system.
FIG. 2 is a schematic view of an example speech recognition model performing deliberation by non-autoregressive decoding.
FIG. 3 is a schematic view of an example non-autoregressive decoder of the speech recognition model of FIG. 2 during an initial refinement step.
FIG. 4 is a flowchart of an example arrangement of operations for a computer-implemented method performing deliberation by non-autoregressive decoding.
FIG. 5 is a schematic view of an example computing device that may be used to implement the systems and methods described herein.

Like reference symbols in the various drawings indicate like elements.

DETAILED DESCRIPTION

End-to-end (E2E) automatic speech recognition (ASR) models are traditionally structured to operate in either a streaming mode or a non-streaming mode. Conventionally, an E2E ASR model includes an encoder and a decoder as the main components. Applications that involve end-user interaction, like voice-search or on-device dictation, may require the model to perform recognition in a streaming fashion. Here, performing recognition in a streaming fashion refers to the ASR model outputting each word of an utterance as they are spoken with as little latency as possible. Other applications, like offline video captioning, do not require the model to be streaming and can make use of future context to improve performance. For example, deliberation models show great improvements on rare word and out-of-vocabulary (OOV) word recognition when compared to long short-term memory (LSTM) or transformer rescoring models. That is, deliberation models excel at correcting initial speech recognition results by using an attention mechanism and looking at a full audio context.

The improved performance of deliberation models comes at a cost of increased latency and increased model size thereby making deliberation models less suitable for streaming and on-device applications. In particular, deliberation models are often autoregressive models that are constrained to deliberate on initial speech recognition results in a left-to-right sequence. On the other hand, non-autoregressive models are not constrained to deliberate on initial speech recognition results in a left-to-right sequence. That is, non-autoregressive models can update multiple positions (e.g., output frames) of the initial speech recognition result simultaneously at each output step. Thus, the non-autoregressive models tend to have a lower latency, however, with a lower accuracy (e.g., word error rate (WER)) of a similar size single-pass autoregressive model.

Implementations herein are directed towards methods and systems for deliberation of a streaming recurrent neural network-transducer (RNN-T) by non-autoregressive decoding. More specifically, a non-autoregressive decoder receives an initial alignment for a candidate hypothesis of an utterance generated by a transducer decoder model during a first pass. Here, the transducer decoder may be a small autoregressive model that generates the candidate hypotheses with a low WER and low latency. The non-autoregressive decoder also receives a subsequent sequence of audio encodings characterizing the utterance. During an initial refinement step, the non-autoregressive decoder generates a new alignment for a rescored sequence of output labels. Notably, the subsequent sequence of audio encodings is generated by a cascading encoder using additional right-context such that the non-autoregressive decoder benefits from the additional audio context before deliberation. That is, the non-autoregressive decoder generates the new alignment based on the label dependency from the additional right-context without the constraint of performing deliberation in the left-to-right sequence. Moreover, as will become apparent, the non-autoregressive decoder may perform any number of additional refinements steps subsequent to the initial refinement step whereby each additional refinement step generates a new alignment.

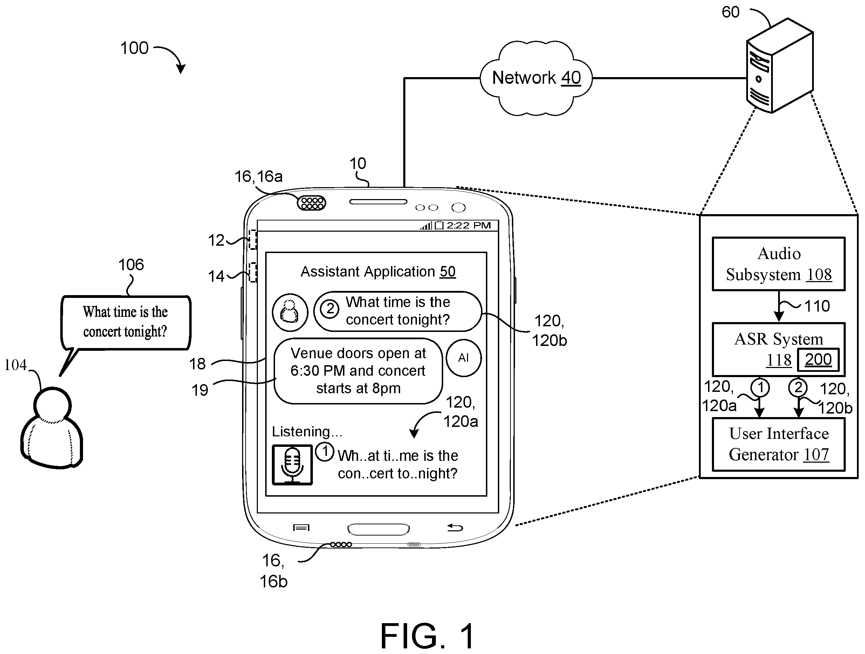

FIG. 1 is an example system 100 operating in a speech environment. In the speech environment, a user's 104 manner of interacting with a computing device, such as a user device 10, may be through voice input. The user device 10 (also referred to generally as a device 10) is configured to capture sounds (e.g., streaming audio data) from one or more users 104 within the speech environment. Here, the streaming audio data may refer to a spoken utterance 106 by the user 104 that functions as an audible query, a command for the user device 10, or an audible communication captured by the device 10. Speech-enabled systems of the user device 10 may field the query or the command by answering the query and/or causing the command to be performed/fulfilled by one or more downstream applications.

The user device 10 may correspond to any computing device associated with a user 104 and capable of receiving audio data. Some examples of user devices 10 include, but are not limited to, mobile devices (e.g., mobile phones, tablets, laptops, etc.), computers, wearable devices (e.g., smart watches), smart appliances, internet of things (IoT) devices, vehicle infotainment systems, smart displays, smart speakers, etc. The user device 10 includes data processing hardware 12 and memory hardware 14 in communication with the data processing hardware 12 and stores instructions, that when executed by the data processing hardware 12, cause the data processing hardware 12 to perform one or more operations. The user device 10 further includes an audio system 16 with an audio capture device (e.g., microphone) 16, 16a for capturing and converting spoken utterances 106 within the speech environment into electrical signals and a speech output device (e.g., speaker) 16, 16b for communicating an audible audio signal (e.g., as output audio data from the user device 10). While the user device 10 implements a single audio capture device 16a in the example shown, the user device 10 may implement an array of audio capture devices 16a without departing from the scope of the present disclosure, whereby one or more capture devices 16a in the array may not physically reside on the user device 10, but be in communication with the audio system 16.

In the speech environment, an automated speech recognition (ASR) system 118 implements an ASR model 200 and resides on the user device 10 of the user 104 and/or on a remote computing device 60 (e.g., one or more remote servers of a distributed system executing in a cloud-computing environment) in communication with the user device 10 via a network 40. In some examples, the ASR model 200 may be a recurrent neural network-transducer (RNN-T) model. The user device 10 and/or the remote computing device 60 also includes an audio subsystem 108 configured to receive the utterance 106 spoken by the user 104 and captured by the audio capture device 16a, and convert the utterance 106 into a corresponding digital format associated with input acoustic frames 110 capable of being processed by the ASR system 118. In the example shown, the user speaks a respective utterance 106 and the audio subsystem 108 converts the utterance 106 into corresponding audio data (e.g., sequence of acoustic frames) 110 for input to the ASR system 118. Thereafter, the ASR model 200 receives, as input, the sequence of acoustic frames 110 corresponding to the utterance 106, and generates/predicts, at each output step, a corresponding transcription 120 (e.g., speech recognition result/hypothesis) of the utterance 106 as the ASR model 200 receives (e.g., processes) each acoustic frame 110 in the sequence of acoustic frames 110.

In the example shown, the ASR model 200 may perform streaming speech recognition to produce an initial speech recognition result (e.g., candidate hypothesis) 120, 120a and generate a final speech recognition result (e.g., final hypothesis) 120, 120b by improving the initial speech recognition result 120a. The initial and final speech recognition result 120a, 120b may either correspond to a partial speech recognition result or an entire speech recognition result. Stated differently, the initial and final speech recognition result 120a, 120b may either correspond to a portion of an utterance 106 or an entire portion of an utterance 106. For example, the partial speech recognition result may correspond to a portion of a spoken utterance or even a portion of a spoken term. However, as will become apparent, the ASR model 200 performs additional processing on the final speech recognition result 120b whereby the final speech recognition result 120b may be delayed from the initial speech recognition result 120a.

The user device 10 and/or the remote computing device 60 also executes a user interface generator 107 configured to present a representation of the transcription 120 of the utterance 106 to the user 104 of the user device 10. As described in greater detail below, the user interface generator 107 may display the initial speech recognition result 120a in a streaming fashion during time 1 and subsequently display the final speech recognition result 120b in a streaming fashion during time 2. Notably, the ASR model 200 outputs the final speech recognition result 120b in a streaming fashion even though the final speech recognition result 120b improves upon the initial speech recognition result 120a. In some configurations, the transcription 120 output from the ASR system 118 is processed (e.g., by a natural language understanding (NLU) module executing on the user device 10 or the remote computing device 60) to execute a user command/query specified by the utterance 106. Additionally or alternatively, a text-to-speech system (not shown) (e.g., executing on any combination of the user device 10 or the remote computing device 60) may convert the transcription 120 into synthesized speech for audible output by the user device 10 and/or another device.

**In** the example shown, the user 104 interacts with a program or application 50 (e.g., the digital assistant application 50) of the user device 10 that uses the ASR system 118. For instance, FIG. 1 depicts the user 104 communicating with the digital assistant application 50 and the digital assistant application 50 displaying a digital assistant interface 18 on a screen of the user device 10 to depict a conversation between the user 104 and the digital assistant application 50. In this example, the user 104 asks the digital assistant application 50, "What time is the concert tonight?" This question from the user 104 is a spoken utterance 106 captured by the audio capture device 16a and processed by audio systems 16 of the user device 10. In this example, the audio system 16 receives the spoken utterance 106 and converts it into a sequence of acoustic frames 110 for input to the ASR system 118.

Continuing with the example, the ASR model 200, while receiving the sequence of acoustic frames 110 corresponding to the utterance 106 as the user 104 speaks, encodes the sequence of acoustic frames 110 and then decodes the encoded sequence of acoustic frames 110 into the initial speech recognition result 120a. During time 1, the user interface generator 107 presents, via the digital assistant interface 18, a representation of the initial speech recognition result 120a of the utterance 106 to the user 104 of the user device 10 in a streaming fashion such that words, word pieces, and/or individual characters appear on the screen as soon as they are spoken. In some examples, the first look ahead audio context is equal to zero.

During time 2, the user interface generator 107 presents, via the digital assistant interface 18, a representation of the final speech recognition result 120b of the utterance 106 to the user 104 of the user device 10 a streaming fashion such that words, word pieces, and/or individual characters appear on the screen as soon as they are generated by the ASR model 200. In some implementations, the user interface generator 107 replaces the representation of the initial speech recognition result 120a presented at time 1 with the representation of the final speech recognition result 120b presented at time 2. Here, time 1 and time 2 may include timestamps corresponding to when the user interface generator 107 presents the respective speech recognition result 120. In this example, the timestamp of time 1 indicates that the user interface generator 107 presents the initial speech recognition result 120a at an earlier time than the final speech recognition result 120b. For instance, as the final speech recognition result 120b is presumed to be more accurate than the initial speech recognition result 120a, the final speech recognition result 120b ultimately displayed as the transcription 120 may fix any terms that may have been misrecognized in the initial speech recognition result 120a. In this example, the streaming initial speech recognition result 120a output by the ASR model 200 is displayed on the screen of the user device 10 at time 1 are associated with low latency and provide responsiveness to the user 104 that his/her query is being processed, while the final speech recognition result 120b output by the ASR model 200 and displayed on the screen at time 2 leverages an additional speech recognition model and/or a language model to improve the speech recognition quality in terms of accuracy, but at increased latency. However, since the initial speech recognition result 120a are displayed as the user speaks the utterance 106, the higher latency associated with producing, and ultimately displaying the final speech recognition result 120b is not noticeable to the user 104.

In the example shown in FIG. 1, the digital assistant application 50 may respond to the question posed by the user 104 using natural language processing. Natural language processing generally refers to a process of interpreting written language (e.g., the initial speech recognition result 120a and/or the final speech recognition result 120b) and determining whether the written language prompts any action. In this example, the digital assistant application 50 uses natural language processing to recognize that the question from the user 104 regards the user's schedule and more particularly a concert on the user's schedule. By recognizing these details with natural language processing, the automated assistant returns a response 19 to the user's query where the response 19 states, "Venue doors open at 6:30 PM and concert starts at 8pm." In some configurations, natural language processing occurs on a remote server 60 in communication with the data processing hardware 12 of the user device 10.

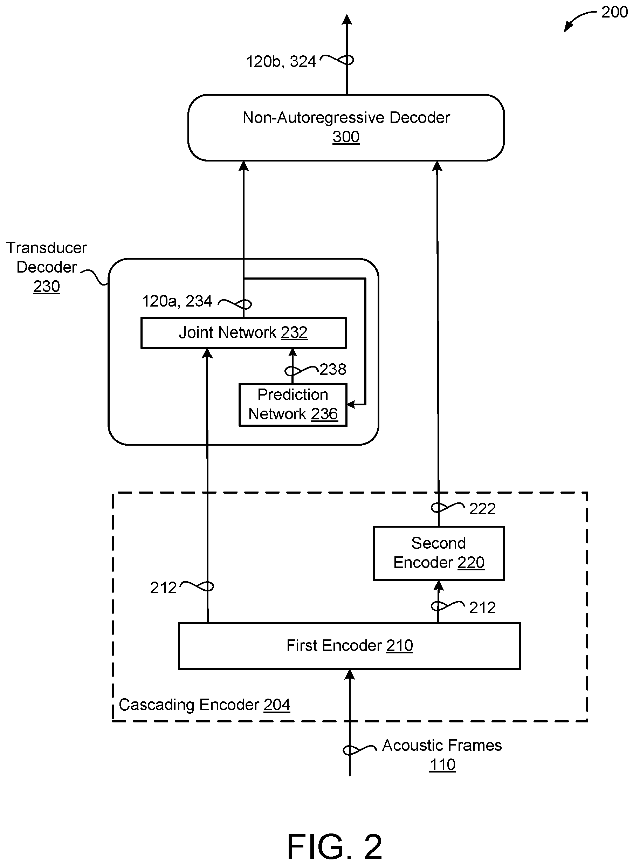

Referring now to FIG. 2, in some examples, the ASR model 200 includes a cascading encoder 204, a transducer decoder 230, and a non-autoregressive decoder 300. The cascading encoder 204 refers to a model structure where the encoding pathway includes two encoders 210, 220 that cascade such that the output of a first encoder 210 feeds the input of a second encoder 220 prior to decoding. Here, the first encoder 210 and the second encoder 220 may be cascaded irrespective of the underlying architecture of each encoder. The encoders 210, 220 may each include a stack of multi-headed (e.g., 8 heads) attention layers. In some examples, the stack of multi-headed attention layers of the encoders 210, 220 includes a stack of 512-dimension conformer layers. In other examples, transformer layers may be used in lieu of conformer layers.

The first encoder 210 may be a causal encoder that includes 17 conformer layers each with a multi-headed (e.g., 8 heads) attention mechanism used as a self-attention layer. Moreover, each conformer layer of the first encoder 210 may use causal convolution and left-context attention layers to restrict the first encoder from using any future inputs (e.g., right-context equal to zero). On the other hand, the second encoder 220 may be a non-causal encoder that includes 4 conformer layers each with a multi-headed (e.g., 8 heads) attention mechanism used as a self-attention layer. Each conformer layer of the second encoder may use non-causal convolution and right-context attention layers thereby allowing the second encoder 220 to use (e.g., attend to) future inputs. That is, the second encoder 220 may receive and process additional right-context (e.g., 2.88 seconds) to generate an encoder output.

With continued reference to FIG. 2, the first encoder 210 receives a sequence of d-dimensional feature vectors (e.g., sequence of acoustic frames 110) $x = (x_1, x_2, \ldots, x_T)$, where $x_t \in \mathbb{R}^d$, and generates, at each output step, a first higher order feature representation 212 for a corresponding acoustic frame 110 in the sequence of acoustic frames 110. Similarly, the second encoder 220 is connected in cascade to the first encoder 210, and receives the first higher-order feature representation 212 as input, and generates, at each output step, a second higher order feature representation 222 for a corresponding first higher order feature representation (e.g., initial sequence of audio encodings) 212. Notably, the second encoder 220 attends to additional right-context to generate each second higher order feature representation (e.g., subsequent sequence of audio encodings) 222. However, in some instances, the second encoder 220 generates the second higher order feature representations 222 without receiving any of the acoustic frames 110 as input. In these instances, the second encoder 220 generates the second higher order feature representations 222 using only the first higher order feature representation 212 as input. The cascading encoder 204 may operate in a streaming fashion such that, at each output step, the cascading encoder 204 generates the first and second higher order feature representations 212, 222 that correspond to either a portion of an utterance or an entire utterance.

The transducer decoder 230 may include a RNN-T architecture having a joint network 232 and a prediction network 236. In some examples, the transducer decoder 230 is an autoregressive model that includes a model size smaller than a model size of the non-autoregressive decoder 300. The transducer decoder uses the joint network 232 to combine the first higher order feature representation 212 output by the first encoder 210 and a dense representation 238 output from the prediction network 236 to generate a decoder output. That is, the joint network 232 is configured to receive, as input, the dense representation 238 output from the prediction network 236 and the first higher order feature representation 212 generated by the first encoder 210 and generate, at each output step, a candidate hypothesis 120a. Although not illustrated, the transducer decoder 230 may include a final Softmax layer that receives the output of the transducer decoder 230. In some implementations, the Softmax layer is separate from the transducer decoder 230 and processes the output from the transducer decoder 230. The output of the Softmax layer is then used in a beam search process to select orthographic elements. In some implementations, the Softmax layer is integrated with the transducer decoder 230, such that the output of the transducer decoder 230 represents the output of the Softmax layer.

In some implementations, the candidate hypothesis 120a output by the transducer decoder 230 includes a probability distribution over possible initial alignments 234 (e.g., a probability associated with each possible initial alignment 234). Stated differently, the joint network 232 generates, at each output step (e.g., time step), the probability distribution over possible initial alignments 234. Here, each "possible initial alignment 234" corresponds to a sequence of output labels/frames each corresponding to a blank symbol or a hypothesized sub-word unit. Each hypothesized sub-word unit may represent a grapheme (symbol/character) or a word piece in a specified natural language. For example, when the natural language is English, the sequence of output labels (i.e., sequence of output frames) may include twenty-eight (28) symbols, e.g., one label for each of the 26-letters in the English alphabet, one label designating a space, and one label designating the blank symbol. Accordingly, the transducer decoder 230 may output a set of values indicative of the likelihood of occurrence of each of a predetermined set of output labels. This set of values can be a vector (e.g., a one-hot vector) and can indicate a probability distribution over the set of output labels. In some scenarios, the output labels are graphemes (e.g., individual characters, and potentially punctuation and other symbols), but the set of output labels is not so limited. For example, the set of output labels can include blank symbols, wordpieces, and/or entire words, in addition to or instead of graphemes. The output labels could also be other types of speech units such as phonemes or sub-phonemes.

In some implementations, the output distribution of the transducer decoder 230 includes a posterior probability value for each of the different output labels at each output frame of the sequence of output frames. Thus, if there are 100 different output labels representing different graphemes, blank symbols, or other symbols, the initial alignment 234 output by the transducer decoder 230 can include 100 different probability values, one for each output label, at each output frame in the sequence of output frames. In some instances, the transducer decoder 230 outputs a single output label having a highest corresponding probability value at each output frame. For example, the transducer decoder 230 may select a hypothesized sub-word unit "adventure" as a respective output frame in the sequence of output frames based on "adventure" having a highest corresponding probability from the probability distribution at the respective output frame.

Alternatively, the transducer decoder 230 may select the blank symbol as a respective output frame in the sequence of output frames based on determining the corresponding probability of each hypothesized sub-word units fails to satisfy a threshold probability value. Stated differently, when the transducer decoder 230 does not generate a corresponding probability for any of the hypothesized sub-word units that satisfies the threshold probability value, the transducer decoder 230 is unlikely to select an accurate hypothesized sub-word unit, and thus, the transducer decoder 230 selects the blank symbol. For example, the transducer decoder 230 may generate an initial alignment 234 of "$\phi\,\phi$ _ pull $\phi\,\phi$ _pamp er s $\phi$ $\phi$" where $\phi$ represents a blank symbol and "_", "pull," "pamp," "er," and "s" each represent a respective hypothesized sub-word unit corresponding to a spoken utterance of "pull campers." Notably, the initial alignment 234 output by the transducer decoder 230 does not correctly correspond to the spoken utterance.

In some examples, the transducer decoder 230 generates a candidate transcription of the candidate hypothesis 120a based on the initial alignment 234. In particular, the candidate transcription of the candidate hypothesis 120a includes a sequence of output labels each corresponding to a hypothesized sub-word unit. As such, the difference between the candidate transcription of the candidate hypothesis 120a and the initial alignment 234 of the candidate hypothesis 120a is that the output labels of the initial alignment 234 may include blank symbols while the candidate transcription does not include any blank symbols. Thus, the transducer decoder 230 may generate the candidate transcription of the candidate hypothesis 120a by removing all blank symbols from the initial alignment 234. Continuing with the above example, the transducer decoder 230 may generate the transcription of "pull pampers" using the initial alignment 234 by removing all of the blank symbols $\phi$. The transducer decoder 230 may output the transcription of the candidate hypothesis 120a to the user device 10 (FIG. 1).

Within the transducer decoder 230, the prediction network 236 may have two 2,048-dimensional LSTM layers, each of which is also followed by a 640-dimeinsinal projection layer. The prediction network 236 receives, as input, a sequence of non-blank symbols output by the final Softmax layer of the joint network 232 and generates, at each output step, a dense representation 238. The joint network 232 receives the dense representation 238 for the previous initial alignment 234 and generates a subsequent initial alignment 234 using the dense representation 238. The non-autoregressive decoder 300 is configured to receive the initial alignment 234 for the candidate hypothesis 120a generated by the transducer decoder 230 at each of the output steps and the second higher order feature representation 222 generated by the second encoder 220 at each of the output steps and generate, at each output step, a final hypothesis 120b. The final hypothesis 120 may include a new alignment 324 for a rescored sequence of output labels.

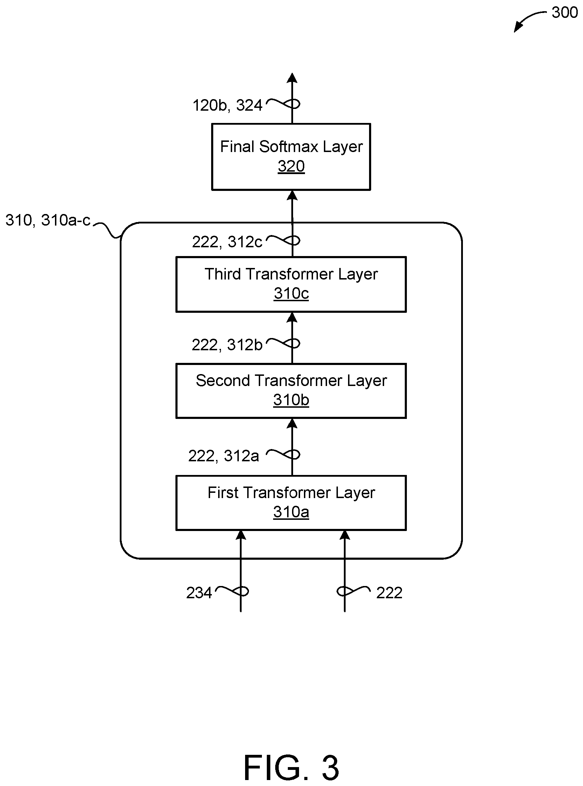

FIG. 3 illustrates the non-autoregressive decoder 300 performing an initial refinement step. The non-autoregressive decoder 300 may include a stack of multi-headed attention layers 310. In some examples, the stack of multi-headed attention layers includes a plurality of transformer layers 310. Thus, the stack of multi-headed attention layers 310 and the plurality of transformer layers 310 may be used interchangeably herein. In other examples, conformer layers may be used in lieu of transformer layers. As shown in FIG. 3, the plurality of transformer layers 310 includes three transformer layers 310a-c for the sake of clarity only as it is understood that the plurality of transformer layers 310 may include any number of transformer layers 310.

Each transformer layer 310 is configured to perform self-attention on text features associated with the initial alignment 234 for the candidate hypothesis 120a. The initial transformer layer 310 in the plurality of transformer layers 310 extracts text features from the initial alignment 234 itself to perform self-attention. As shown in FIG. 3, a first transformer layer 310, 310a includes the initial transformer layer 310 and is configured to extract text features from the initial alignment 234 to perform self-attention. On the other hand, each respective transformer layer 310 subsequent to the initial transformer layer 310 in the plurality of transformer layers 310 receives the transformer layer output 312 from a corresponding previous transformer layer 310 and extracts text features from the transformer layer output 312. With continued reference to FIG. 3, a second transformer layer 310, 310b extracts text features from a first transformer layer output 312, 312a output by the first transformer layer 310a to perform self-attention and a third transformer layer 310, 310c extracts text features from a second transformer layer output 312, 312b output by the second transformer layer 310b to perform self-attention

Each transformer layer 310 is further configured to use the self-attention performed on the text features as a query to perform cross-attention on the second higher order feature representation 222 representing both a key and value to provide (i.e., generate) a transformer layer output 312. The transformer layer 310 may receive the second higher order feature representation 222 directly from the second encoder 220 or from a corresponding previous transformer layer 310. As shown in FIG. 3, the first transformer layer 310a uses the self-attention performed on the text features from the initial alignment 234 as a query to perform cross-attention on the second higher order feature representation 222 to generate the first transformer layer output 312a. Moreover, the second and third transformer layers 310b, 310c use the self-attention performed on the text features from the respective transformer layer outputs 312 as a query to perform cross-attention on the second higher order feature representation 222 to generate the second and third transformer layer outputs 312b, 312c, respectively.

A final transformer layer 310 in the plurality of transformer layers provides the transformer layer output 312 to a final Softmax layer 320 configured to predict the final hypothesis 120b. As shown in FIG. 3, the third transformer layer 310c is the final transformer layer 310 in the plurality of transformer layers 310 such that the third transformer layer 310c sends the third transformer layer output 312c to the final Softmax layer 320. The non-autoregressive decoder 300 may send the final hypothesis 120b to the user device 10 (FIG. 1).

The final hypothesis output 120b output by the non-autoregressive decoder 300 may include a probability distribution over possible new alignments 324. Here, each "possible new alignment 324" corresponds to sequence of output labels/frames each corresponding to a blank symbol or hypothesized sub-word unit. The probability distribution output by the non-autoregressive decoder 300 may include a posterior probability value for each of the different output labels at each output frame of the sequence of output frames. Thus, if there are 100 different output labels representing different graphemes, blank symbols, or other symbols, the new alignment 324 output by the non-autoregressive decoder 300 can include 100 different probability values, one for each output label, at each output frame in the sequence of output frames. In some instances, the non-autoregressive decoder 300 outputs a single output label having a highest corresponding probability value at each output frame. In these instances, the non-autoregressive decoder 300 may output the single output label having the highest corresponding probability value at each output frame simultaneously (e.g., parallel greedy decoding). Alternatively, the transducer decoder 230 may select the blank symbol as a respective output frame in the sequence of output frames based on determining the corresponding probability of each hypothesized sub-word units fails to satisfy a threshold probability value.

The probability distribution output by the non-autoregressive decoder 300 may be similar to the probability distribution output by the transducer decoder 230, but the posterior probability values may be different at each output frame because of the additional processing the non-autoregressive decoder 300 performs using the plurality of transformer layers 310 and the second higher order feature representation 222. That is, the non-autoregressive decoder 300 improves upon the initial alignment 234 by using the second higher order feature representation 222 and the transformer layer outputs 312 to generate the new alignment 324. More specifically, the non-autoregressive decoder 300 may improve the initial alignment 234 by deleting one or more output labels of the initial alignment 234. The non-autoregressive decoder 300 may also improve the initial alignment 234 by inserting or substituting one or more of the rescored sequence of output labels of the new alignment 324 for the sequence of output labels of the initial alignment 234. For example, the non-autoregressive decoder 300 may receive the initial alignment 234 "$\phi\phi$_pull$\phi\phi$_pamp er s$\phi$ $\phi$" and the corresponding second higher order feature representation 222 and generate the new alignment 324 of "$\phi$_pull$\phi\phi$_camp er s$\phi\phi$". In this example, the non-autoregressive decoder 300 generated the new alignment 324 by removing a blank symbol from a beginning of the initial alignment 234, adding a blank symbol to an end of the initial alignment 234, and substituting the hypothesized sub-word unit "pamp" with the hypothesized sub-word unit of "camp." Thus, the new alignment 324 improves upon the errors of the initial alignment 234 such that the new alignment 324 correctly corresponds to the spoken utterance 106 "pull campers."

In some examples, the non-autoregressive decoder 300 generates a final transcription of the final hypothesis 120b based on the new alignment 324. In particular, the final transcription of the final hypothesis 120b includes a sequence of output labels each corresponding to a hypothesized sub-word unit. As such, the difference between the final transcription of the final hypothesis 120b and the new alignment 324 of the final hypothesis 120b is that the output labels of the new alignment 324 may include blank symbols while the final transcription does not include any blank symbols. Thus, the non-autoregressive decoder 300 may generate the final transcription by removing all blank symbols from the new alignment 324. Continuing with the above example, the transducer decoder 230 may generate the transcription of "pull campers" using the new alignment 324 by removing all of the blank symbols $\phi$.

While FIG. 3 only illustrates the non-autoregressive decoder 300 performing an initial refinement step to generate the new alignment 324, it is understood that the non-autoregressive decoder 300 may perform one or more (e.g., any number) additional refinement steps. During each additional refinement step subsequent to the initial refinement step (FIG. 3), the non-autoregressive decoder 300 is configured to receive the new alignment 324 generated during a previous refinement step and generate another new alignment for a rescored sequence of output labels. For example, a second refinement step (e.g., subsequent to the initial refinement step of FIG. 3) would receive the new alignment 324 generated during the initial refinement step. Thus, in this example, the non-autoregressive decoder 300 uses the new alignment 324 (e.g., rather than the initial alignment 234) as input to the first transformer layer 310a. In some implementations, the non-autoregressive decoder 300 performs a predetermined number of refinement steps before outputting the final hypothesis 120b to the user device 10 (FIG. 1). In other implementations, the non-autoregressive decoder 300 continues performing additional refinement steps until the new alignment 324 satisfies a confidence threshold value.

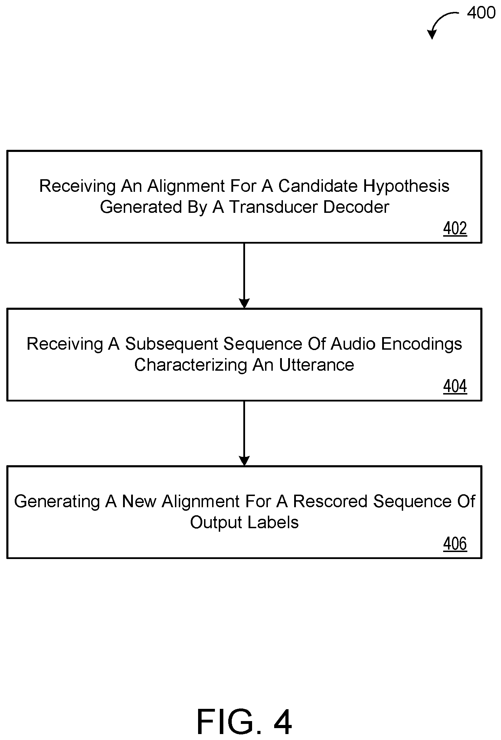

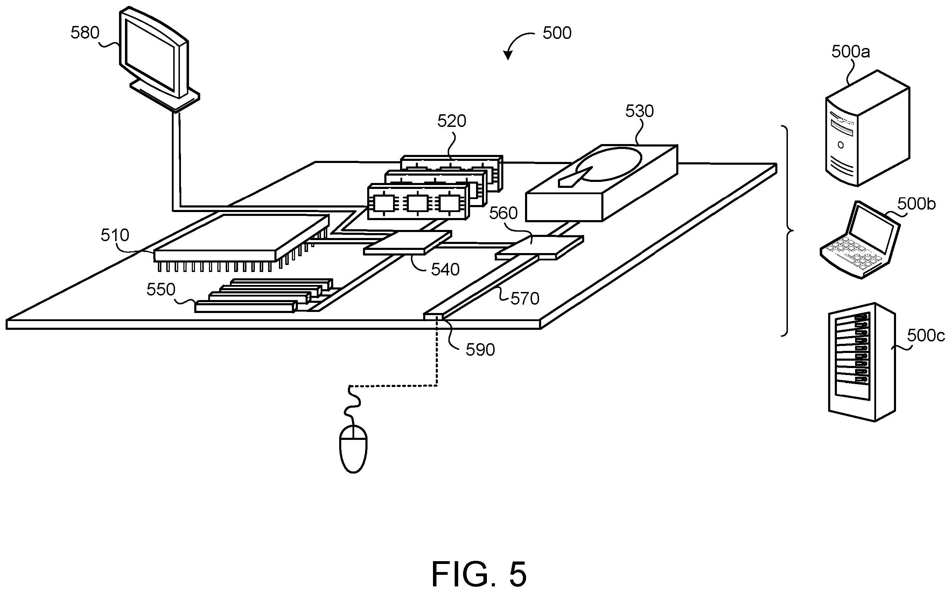

FIG. 4, is a flowchart of an example arrangement of operations for a method 400 of performing deliberation of streaming RNN-T by non-autoregressive decoding. The method 400 may execute on data processing hardware 510 (FIG. 5) using instructions stored on memory hardware 520 (FIG. 5). The data processing hardware 510 and the memory hardware 520 may reside on the user device 10 and/or the remote computing device 60 of FIG. 1 corresponding to a computing device 500 (FIG. 5).

At operation 402, the method 400 includes receiving an initial alignment 234 for a candidate hypothesis 120a generated by a transducer decoder 230 model during a first pass. Here, the candidate hypothesis 120a corresponds to a candidate transcription for an utterance 106. The candidate transcription includes a sequence of output labels each corresponding to a hypothesized sub-word unit. On the other hand, the initial alignment 234 for the candidate hypothesis 120a includes a sequence of output labels each corresponding to a blank symbol or a hypothesized sub-word unit. At operation 404, the method 400 includes receiving a second higher order feature representation (e.g., subsequent sequence of audio encodings) 222 characterizing the utterance 106. At operation 406, the method 400 includes generating, using a non-autoregressive decoder 300, a new alignment 324 for a rescored sequence of output labels during an initial refinement step. In particular, the non-autoregressive decoder 300 is configured to receive the initial alignment 234 for the candidate hypothesis 120a generated by the transducer decoder model 230 during the first pass and the second higher order feature representation 222. Moreover, the non-autoregressive decoder 300 may generate the final hypothesis 120b by removing the blank symbols from the sequence of output labels of the new alignment 324.

FIG. 5 is schematic view of an example computing device 500 that may be used to implement the systems and methods described in this document. The computing device 500 is intended to represent various forms of digital computers, such as laptops, desktops, workstations, personal digital assistants, servers, blade servers, mainframes, and other appropriate computers. The components shown here, their connections and relationships, and their functions, are meant to be exemplary only, and are not meant to limit implementations of the inventions described and/or claimed in this document.

The computing device 500 includes a processor 510, memory 520, a storage device 530, a high-speed interface/controller 540 connecting to the memory 520 and high-speed expansion ports 550, and a low speed interface/controller 560 connecting to a low speed bus 570 and a storage device 530. Each of the components 510, 520, 530, 540, 550, and 560, are interconnected using various busses, and may be mounted on a common motherboard or in other manners as appropriate. The processor 510 can process instructions for execution within the computing device 500, including instructions stored in the memory 520 or on the storage device 530 to display graphical information for a graphical user interface (GUI) on an external input/output device, such as display 580 coupled to high speed interface 540. In other implementations, multiple processors and/or multiple buses may be used, as appropriate, along with multiple memories and types of memory. Also, multiple computing devices 500 may be connected, with each device providing portions of the necessary operations (e.g., as a server bank, a group of blade servers, or a multi-processor system).

The memory 520 stores information non-transitorily within the computing device 500. The memory 520 may be a computer-readable medium, a volatile memory unit(s), or non-volatile memory unit(s). The non-transitory memory 520 may be physical devices used to store programs (e.g., sequences of instructions) or data (e.g., program state information) on a temporary or permanent basis for use by the computing device 500. Examples of non-volatile memory include, but are not limited to, flash memory and read-only memory (ROM) / programmable read-only memory (PROM) / erasable programmable read-only memory (EPROM) / electronically erasable programmable read-only memory (EEPROM) (e.g., typically used for firmware, such as boot programs). Examples of volatile memory include, but are not limited to, random access memory (RAM), dynamic random access memory (DRAM), static random access memory (SRAM), phase change memory (PCM) as well as disks or tapes.

The storage device 530 is capable of providing mass storage for the computing device 500. In some implementations, the storage device 530 is a computer-readable medium. In various different implementations, the storage device 530 may be a floppy disk device, a hard disk device, an optical disk device, or a tape device, a flash memory or other similar solid state memory device, or an array of devices, including devices in a storage area network or other configurations. In additional implementations, a computer program product is tangibly embodied in an information carrier. The computer program product contains instructions that, when executed, perform one or more methods, such as those described above. The information carrier is a computer- or machine-readable medium, such as the memory 520, the storage device 530, or memory on processor 510.

The high speed controller 540 manages bandwidth-intensive operations for the computing device 500, while the low speed controller 560 manages lower bandwidth-intensive operations. Such allocation of duties is exemplary only. In some implementations, the high-speed controller 540 is coupled to the memory 520, the display 580 (e.g., through a graphics processor or accelerator), and to the high-speed expansion ports 550, which may accept various expansion cards (not shown). In some implementations, the low-speed controller 560 is coupled to the storage device 530 and a low-speed expansion port 590. The low-speed expansion port 590, which may include various communication ports (e.g., USB, Bluetooth, Ethernet, wireless Ethernet), may be coupled to one or more input/output devices, such as a keyboard, a pointing device, a scanner, or a networking device such as a switch or router, e.g., through a network adapter.

The computing device 500 may be implemented in a number of different forms, as shown in the figure. For example, it may be implemented as a standard server 500a or multiple times in a group of such servers 500a, as a laptop computer 500b, or as part of a rack server system 500c.

Various implementations of the systems and techniques described herein can be realized in digital electronic and/or optical circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, non-transitory computer readable medium, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

The processes and logic flows described in this specification can be performed by one or more programmable processors, also referred to as data processing hardware, executing one or more computer programs to perform functions by operating on input data and generating output. The processes and logic flows can also be performed by special purpose logic circuitry, e.g., an FPGA (field programmable gate array) or an ASIC (application specific integrated circuit). Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data include all forms of nonvolatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, one or more aspects of the disclosure can be implemented on a computer having a display device, e.g., a CRT (cathode ray tube), LCD (liquid crystal display) monitor, or touch screen for displaying information to the user and optionally a keyboard and a pointing device, e.g., a mouse or a trackball, by which the user can provide input to the computer. Other kinds of devices can be used to provide interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

A number of implementations have been described. Nevertheless, it will be understood that various modifications may be made without departing from the scope of the disclosure. Accordingly, other implementations are within the scope of the following claims.

**Claims**

1. A computer-implemented method (400) when executed by data processing hardware (510) causes the data processing hardware (510) to perform operations comprising:

    receiving an initial alignment (234) for a candidate hypothesis (120a) generated by a transducer decoder model (230) during a first pass based on an initial sequence of audio encodings (212) characterizing an utterance (106), the candidate hypothesis (120a) corresponding to a candidate transcription for the utterance (106) and the initial alignment (234) for the candidate hypothesis (120a) comprising a sequence of output labels each corresponding to a blank symbol or a hypothesized sub-word unit;
    receiving a subsequent sequence of audio encodings (222) characterizing the utterance (106); and
    during an initial refinement step, generating, using a non-autoregressive decoder (300) configured to receive the initial alignment (234) for the candidate hypothesis (120a) generated by the transducer decoder model (230) during the first pass and the subsequent sequence of audio encodings (222), a new alignment (324) for a rescored sequence of output labels.

2. The computer-implemented method (400) of claim 1, wherein the non-autoregressive decoder (300) comprises a plurality of transformer layers (310) each configured to:

    perform self-attention on text features associated with the initial alignment (234); and
    use the self-attention performed on the text features as a query to perform cross-attention on the subsequent sequence of audio encodings (222) representing both a key and value to provide a transformer layer output (312).

3. The computer-implemented method (400) of claim 2, wherein each respective transformer layer (310) subsequent to an initial transformer layer (310) in the plurality of transformer layers (310) receives the transformer layer output (312) from a corresponding previous transformer layer (310) as the text features.

4. The computer-implemented method (400) of claim 2 or 3, wherein a final transformer layer (310) in the plurality of transformer layers (310) provides the transformer layer output (312) to a final softmax layer (320) configured to predict the new alignment (324) for the rescored sequence of output labels.

5. The computer-implemented method (400) of any of claims 1-4, wherein the operations further comprise, during each of one or more additional refinement steps subsequent to the initial refinement step, generating, using the non-autoregressive decoder (300) configured to receive the new alignment (324) for the rescored sequence of output labels generated during a previous refinement step, a new alignment (324) for a rescored sequence of output labels.

6. The computer-implemented method (400) of any of claims 1-5, wherein generating the new alignment (324) for the rescored sequence of output labels comprises inserting, deleting, or substituting one or more output labels of the initial alignment (234) for the candidate hypothesis (120a).

7. The computer-implemented method (400) of any of claims 1-6, wherein the operations further comprise generating, by a causal encoder (210) during the first pass, the initial sequence of audio encodings (212) based on a sequence of acoustic frames (110) corresponding to an utterance (106).

8. The computer-implemented method (400) of claim 7, wherein the subsequent sequence of audio encodings (222) are encoded by a non-causal encoder (220) based on the initial sequence of audio encodings (212).

9. The computer-implemented method (400) of claim 7 or 8, wherein the transducer decoder (230) generates the candidate hypothesis (120a) using the initial sequence of audio encodings (212).

10. The computer-implemented method (400) of any of claims 1-9, wherein the candidate transcription of the candidate hypothesis (120a) comprises a sequence of output labels each corresponding to a hypothesized sub-word unit.

11. A system (100) comprising:

    data processing hardware (510); and
    memory hardware (520) in communication with the data processing hardware (510), the memory hardware (520) storing instructions that when executed on the data processing hardware (510) cause the data processing hardware (510) to perform the method of any preceding claim.

**Patentansprüche**

1. Computerimplementiertes Verfahren (400), das bei Ausführung durch Datenverarbeitungshardware (510) die Datenverarbeitungshardware (510) dazu veranlasst, Operationen durchzuführen, die Folgendes umfassen:

Empfangen eines anfänglichen Alignments (234) für eine Kandidatenhypothese (120a), die durch ein Transducer-Decoder-Modell (230) während eines ersten Durchgangs basierend auf einer anfänglichen Sequenz von Audio-Kodierungen (212) erzeugt wurde, die eine Äußerung (106) charakterisieren, wobei die Kandidatenhypothese (120a) einer Kandidatentranskription für die Äußerung (106) entspricht und das anfängliche Alignment (234) für die Kandidatenhypothese (120a) eine Sequenz von Ausgabelabeln umfasst, die jeweils einem Leerzeichen-Symbol oder einer hypothesierten Sub-Wort-Einheit entsprechen;
Empfangen einer nachfolgenden Sequenz von Audio-Kodierungen (222), die die Äußerung (106) charakterisieren; und
während eines anfänglichen Verfeinerungsschritts, Erzeugen eines neuen Alignments (324) für eine neu bewertete Sequenz von Ausgabelabeln unter Verwendung eines nicht-autoregressiven Decoders (300), der so konfiguriert ist, dass er das anfängliche Alignment (234) für die Kandidatenhypothese (120a), das durch das Transducer-Decoder-Modell (230) während des ersten Durchgangs erzeugt wurde, und die nachfolgende Sequenz von Audio-Kodierungen (222) empfängt.

2. Computerimplementiertes Verfahren (400) nach Anspruch 1, wobei der nicht-autoregressive Decoder (300) eine Vielzahl von Transformer-Schichten (310) umfasst, die jeweils für Folgendes konfiguriert sind:

Durchführen von Self-Attention auf Textmerkmalen, die dem anfänglichen Alignment (234) zugeordnet sind; und
Verwenden der auf den Textmerkmalen durchgeführten Self-Attention als eine Abfrage, um Cross-Attention auf der nachfolgenden Sequenz von Audio-Kodierungen (222) durchzuführen, die sowohl einen Schlüssel als auch einen Wert darstellen, um eine Transformer-Schicht-Ausgabe (312) bereitzustellen.

3. Computerimplementiertes Verfahren (400) nach Anspruch 2, wobei jede jeweilige Transformer-Schicht (310), die auf eine anfängliche Transformer-Schicht (310) in der Vielzahl von Transformer-Schichten (310) folgt, die Transformer-Schicht-Ausgabe (312) von einer entsprechenden vorherigen Transformer-Schicht (310) als die Textmerkmale empfängt.

4. Computerimplementiertes Verfahren (400) nach Anspruch 2 oder 3, wobei eine finale Transformer-Schicht (310) in der Vielzahl von Transformer-Schichten (310) die Transformer-Schicht-Ausgabe (312) an eine finale Softmax-Schicht (320) bereitstellt, die so konfiguriert ist, dass sie das neue Alignment (324) für die neu bewertete Sequenz von Ausgabelabeln vorhersagt.

5. Computerimplementiertes Verfahren (400) nach einem der Ansprüche 1-4, wobei die Operationen ferner umfassen, während jedes eines oder mehrerer zusätzlicher Verfeinerungsschritte, die auf den anfänglichen Verfeinerungsschritt folgen, ein neues Alignment (324) für eine neu bewertete Sequenz von Ausgabelabeln unter Verwendung des nicht-autoregressiven Decoders (300) zu erzeugen, der so konfiguriert ist, dass er das neue Alignment (324) für die während eines vorherigen Verfeinerungsschritts erzeugte neu bewertete Sequenz von Ausgabelabeln empfängt.

6. Computerimplementiertes Verfahren (400) nach einem der Ansprüche 1-5, wobei das Erzeugen des neuen Alignments (324) für die neu bewertete Sequenz von Ausgabelabeln das Einfügen, Löschen oder Ersetzen eines oder mehrerer Ausgabelabel des anfänglichen Alignments (234) für die Kandidatenhypothese (120a) umfasst.

7. Computerimplementiertes Verfahren (400) nach einem der Ansprüche 1-6, wobei die Operationen ferner das Erzeugen der anfänglichen Sequenz von Audio-Kodierungen (212) durch einen kausalen Kodierer (210) während des ersten Durchgangs basierend auf einer Sequenz von akustischen Frames (110) umfassen, die einer Äußerung (106) entsprechen.

8. Computerimplementiertes Verfahren (400) nach Anspruch 7, wobei die nachfolgende Sequenz von Audio-Kodierungen (222) durch einen nicht-kausalen Kodierer (220) basierend auf der anfänglichen Sequenz von Audio-Kodierungen (212) kodiert wird.

9. Computerimplementiertes Verfahren (400) nach Anspruch 7 oder 8, wobei der Transducer-Decoder (230) die Kandidatenhypothese (120a) unter Verwendung der anfänglichen Sequenz von Audio-Kodierungen (212) erzeugt.

10. Computerimplementiertes Verfahren (400) nach einem der Ansprüche 1-9, wobei die Kandidatentranskription der Kandidatenhypothese (120a) eine Sequenz von Ausgabelabeln umfasst, die jeweils einer hypothesierten Sub-Wort-Einheit entsprechen.

11. System (100), umfassend:

Datenverarbeitungshardware (510); und Speicherhardware (520), die in Kommunikation mit der Datenverarbeitungshardware (510) steht, wobei die Speicherhardware (520) Anweisungen speichert, die bei Ausführung auf der Datenverarbeitungshardware (510) die Datenverarbeitungshardware (510) dazu veranlassen, das Verfahren nach einem der vorhergehenden Ansprüche durchzuführen.

## Revendications

1. Procédé mis en œuvre par ordinateur (400) qui, lorsqu'il est exécuté sur un matériel de traitement de données (510), amène le matériel de traitement de données (510) à réaliser des opérations comprenant :

la réception d'un alignement initial (234) pour une hypothèse candidate (120a) générée par un modèle de décodeur transducteur (230) lors d'une première passe basée sur une séquence initiale d'encodages audio (212) caractérisant un énoncé (106), l'hypothèse candidate (120a) correspondant à une transcription candidate pour l'énoncé (106) et l'alignement initial (234) pour l'hypothèse candidate (120a) comprenant une séquence d'étiquettes de sortie correspondant chacune à un symbole vide ou à une unité de sous-mot hypothétique ;
la réception d'une séquence ultérieure d'encodages audio (222) caractérisant l'énoncé (106) ; et
lors d'une étape de raffinement initiale, la génération, à l'aide d'un décodeur non autorégressif (300) configuré pour recevoir l'alignement initial (234) pour l'hypothèse candidate (120a) générée par le modèle de décodeur de transducteur (230) lors du premier passage et de la séquence suivante d'encodages audio (222), d'un nouvel alignement (324) pour une séquence réévaluée d'étiquettes de sortie.

2. Procédé mis en œuvre par ordinateur (400) selon la revendication 1, dans lequel le décodeur non autorégressif (300) comprend une pluralité de couches de transformateurs (310) chacune étant configurée pour :

réaliser une auto-attention sur les caractéristiques textuelles associées à l'alignement initial (234) ; et

utiliser l'auto-attention réalisée sur les caractéristiques du texte comme demande pour réaliser une attention croisée sur la séquence suivante d'encodages audio (222) représentant à la fois une clé et une valeur pour fournir une sortie de couche de transformateur (312).

3. Procédé mis en œuvre par ordinateur (400) selon la revendication 2, dans lequel chaque couche de transformateur respective (310) suivant une couche de transformateur initiale (310) dans la pluralité de couches de transformateurs (310) reçoit la sortie de la couche de transformateur (312) d'une couche de transformateur précédente correspondante (310) comme caractéristiques de texte.

4. Procédé mis en œuvre par ordinateur (400) selon la revendication 2 ou 3, dans lequel une couche de transformateur finale (310) dans la pluralité de couches de transformateurs (310) fournit la sortie de la couche de transformateur (312) à une couche softmax finale (320) configurée pour prédire le nouvel alignement (324) pour la séquence réévaluée d'étiquettes de sortie.

5. Procédé mis en œuvre par ordinateur (400) selon l'une quelconque des revendications 1 à 4, dans lequel les opérations comprennent également, au cours de chacune d'une ou plusieurs étapes d'affinage supplémentaires faisant suite à l'étape d'affinage initiale, la génération, à l'aide du décodeur non autorégressif (300) configuré pour recevoir le nouvel alignement (324) pour la séquence réévaluée d'étiquettes de sortie générée au cours d'une étape d'affinage précédente, d'un nouvel alignement (324) pour une séquence réévaluée d'étiquettes de sortie.

6. Procédé mis en œuvre par ordinateur (400) selon l'une quelconque des revendications 1 à 5, dans lequel la génération du nouvel alignement (324) pour la séquence réévaluée d'étiquettes de sortie comprend l'insertion, la suppression ou la substitution d'une ou de plusieurs étiquettes de sortie de l'alignement initial (234) pour l'hypothèse candidate (120a).

7. Procédé mis en œuvre par ordinateur (400) selon l'une quelconque des revendications 1 à 6, dans lequel les opérations comprennent également la génération, par un encodeur causal (210) lors du premier passage, de la séquence initiale d'encodages audio (212) basée sur une séquence de trames acoustiques (110) correspondant à un énoncé (106).

8. Procédé mis en œuvre par ordinateur (400) selon la revendication 7, dans lequel la séquence suivante d'encodages audio (222) est encodée par un encodeur non causal (220) basé sur la séquence initiale d'encodages audio (212).

9. Procédé mis en œuvre par ordinateur (400) selon la revendication 7 ou 8, dans lequel le décodeur de transducteur (230) génère l'hypothèse candidate (120a) à l'aide de la séquence initiale d'encodages audio (212).

10. Procédé mis en œuvre par ordinateur (400) selon l'une quelconque des revendications 1 à 9, dans lequel la transcription candidate de l'hypothèse candidate (120a) comprend une séquence d'étiquettes de sortie correspondant chacune à une unité de sous-mot hypothétique.

11. Système (100) comprenant :

un matériel de traitement de données (510) ; et un matériel de mémoire (520) en communication avec le matériel de traitement de données (510), le matériel de mémoire (520) stockant des instructions qui, lorsqu'elles sont exécutées sur le matériel de traitement de données (510), amènent le matériel de traitement de données (510) à réaliser le procédé selon une quelconque revendication précédente.

FIG. 1

FIG. 2

FIG. 3

400

```
┌─────────────────────────────────────────────────┐
│                                                 │
│   Receiving An Alignment For A Candidate Hypothesis  │
│         Generated By A Transducer Decoder            │
│                                            402   │
│                                                 │
└─────────────────────────────────────────────────┘
                        │
                        ▼
┌─────────────────────────────────────────────────┐
│                                                 │
│   Receiving A Subsequent Sequence Of Audio Encodings │
│            Characterizing An Utterance               │
│                                            404   │
│                                                 │
└─────────────────────────────────────────────────┘
                        │
                        ▼
┌─────────────────────────────────────────────────┐
│                                                 │
│   Generating A New Alignment For A Rescored Sequence Of │
│                  Output Labels                       │
│                                            406   │
│                                                 │
└─────────────────────────────────────────────────┘
```

# FIG. 4

FIG. 5

EP 4 405 940 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RUCHAO FAN et al.** *CASS-NAT: CTC Alignment-based Single Step Non-autoregressive Transformer for Speech Recognition*